# EUROPEAN PATENT APPLICATION

(11) **EP 1 462 959 A2**
(43) Date of publication of application: **29.09.2004**
(21) Application number: 04006604.5
(22) Date of filing: 18.03.2004
(51) Int. Cl.: G06F 17/30

(54) **System and method for invalidation of cached query results**

(30) Priority: 28.03.2003 US 402031
(71) Applicant: MICROSOFT CORPORATION, Redmond, Washington 98052 (US)
(72) Inventor: Pizzo, Michael J., Bellevue Washington 98008 (US); Howard, Robert M., Snoqualmie Washington 98065 (US); Kleinerman, Christian, Bellevue Washington 98007 (US); Yu-Kwan Ng, Patrick, Redmond Washington 98052 (US); Noss, John F., Issaquah Washington 98027 (US); Smith, Adam W., Redmond Washington 98053 (US); Trutner, Oren, Kirkland Washington 98033 (US); Waas, Florian M., Seattle Washington 98104 (US)
(74) Representative: Grünecker, Kinkeldey, Stockmair & Schwanhäusser Anwaltssozietät

(57) **Abstract**

The present invention relates to systems and methods for saving results generated from database queries such as raw data, objects. queryable data sets, full or partial web responses, in memory for current and subsequent utilization and invaliding the saved results when they become inconsistent to mitigate employing inconsistent results. The saved results can be employed by one or more components and are typically utilized when a subsequent query would return substantially similar results. Thus, the system and methods mitigate performing substantially redundant queries that can reduce performance and consume resources. When a database change occurs that affect the consistency of the saved results and/or expiration period lapses, an invalidation message can be transmitted, wherein the message is employed to invalidate the saved results. Thus, the systems and methods mitigate employing inconsistent saved results. In addition, automatic requerying techniques can be employed to automatically refresh inconsistent results to obtain consistent results.

## Description

### TECHNICAL FIELD

The present invention relates generally to databases, and more particularly to systems and methods for saving results generated from database query(s) for subsequent utilization, and invalidating the saved results when they become inconsistent with the database.

### BACKGROUND OF THE INVENTION

Computing and networking technologies have transformed many important aspects of everyday life. Computers have become a household staple instead of a luxury, educational tool and/or entertainment center, and provide users with a tool to manage and forecast finances, control household operations like heating, cooling, lighting and security, and store records and images in a permanent and reliable medium. Networking technologies like the Internet provide users with virtually unlimited access to remote systems, information and associated applications.

As computing and networking technologies become robust, secure, and reliable, more consumers, wholesalers, retailers, entrepreneurs, educational institutions and the like are shifting paradigms and employing the Internet to perform business instead of the traditional means. For example, many businesses and consumers are providing web sites and/or on-line services. For example, today a consumer can access his/her account *via* the Internet and perform a growing number of available transactions such as balance inquiries, funds transfers and bill payment.

Typically, an Internet session includes a user interfacing with a client application (*e.g.,* a web server) to interact with a database server that stores information in a database that is accessible to the client application. For example, a stock market web site can provide the user with tools for retrieving stock quotes and purchasing stock. The user can type in a stock symbol and request a stock quote by performing a mouse click to activate a query. The client application then queries a database(s) with stock information and returns the stock quote. Likewise, the user can purchase the stock *via* providing suitable information, wherein submitting the order can initiate a database query to return current price information and order status.

As more users take advantage of such services, more bandwidth is consumed which can reduce performance and/or speed since bandwidth is a limited resource. Another shortcoming is the limited available data transfer rates relative to the quantity of data available. For example, requests that retrieve large amounts of data (*e.g.*, distributed across various servers) can be time intensive and performance limiting, even when bandwidth is available.

The foregoing is compounded by users performing frequent and similar requests. For example, a user desiring current stock quotes may perform frequent requests to obtain updated quotes. Thus, the user frequently consumes bandwidth to retrieve substantially similar information. In addition, other users can concurrently perform requests that retrieve substantially similar information. The user(s) is further limited in that the consistency of the retrieved data cannot be guaranteed because the returned results can become invalid after a subsequent database table change.

### SUMMARY OF THE INVENTION

The following presents a simplified summary of the invention in order to provide a basic understanding of some aspects of the invention. This summary is not an extensive overview of the invention. It is not intended to identify key/critical elements of the invention or to delineate the scope of the invention. Its sole purpose is to present some concepts of the invention in a simplified form as a prelude to the more detailed description that is presented later.

The present invention relates to systems and methods for invalidating saved results generated from database queries when the results become invalid due to a database change and/or due to an expiration period lapse. Thus, the present invention provides a mechanism to query a database, save results generated from the database query(s), and utilize the saved results until a database change and/or expiration period invalidate the results.

Generally, databases store information that is retrievable *via* querying the database. A user can interface with an application, for example, to obtain at least a portion of the information stored within the database. For example, a user may employ a web service and submit a request that is associated with information stored on a server. The request will initiate one or more queries of relevant database(s), and then the results of the one or more queries can be used to generate a response to be returned from the web service displayed consumed and/or further employed.

In many instances, a database can become a common source of resource contention. For example, more than one user can transmit a similar request that concurrently queries the database and returns similar results. Such concurrent querying for similar results can increase database load, reduce bandwidth, diminish performance and consume resources, for example. In another example, one or more users can frequently perform requests that return similar results. Likewise, system performance can be reduced *via* the database load, for example. Under the foregoing, the database represents a state that is shared amongst a plurality of user requests and/or users, and shared state contention can limit system performance and scalability.

A typically employed technique to reduce the number of queries comprises saving frequently utilized data (*e.g.,* in the form of raw data, transformed data, and data in a queryable form) externally from the database, and utilizing the saved results instead of performing additional queries. However, the consistency of the saved data is compromised because a subsequent database change can occur to render the saved data inconsistent with the database without apprising the user(s).

The systems and methods of the present invention reduce database load (*e.g.*, reduce query(s)) for substantially similar information), increase scalability, reduce repetitive processing, and ensure data consistency. The systems and methods include storing invalidation information in a context bank, wherein the invalidation information can be retrieved and transmitted with a query in order to associate the query with a query requester and register the query with a database. The results (*e.g.*, raw data, transformed data, data in a queryable form, a partial response and a full response) generated from the query can then be saved in an accessible storage medium external to the database, and employed one or more times, and by various users (*e.g.*, web servers), thus mitigating querying for substantially similar information.

If database change occurs that would affect the stored results, an invalidation message can be sent to facilitate invalidating the saved results to mitigate a user from employing inconsistent data. The invalidation information transmitted with the query is typically utilized to construct the invalidation message. In addition, an expiration period can be defined such that the saved results will be invalidated after the expiration period lapses, even if a database change has not occurred. After invalidating the saved results, the results can be automatically discarded and/or automatically refreshed, for example.

Furthermore, the systems and methods of the present invention can be employed in a web environment, wherein further reduction in latency and usage of web server resources can be achieved when the web response generated from a database query(s) can be stored, in whole or in part, and returned in response to subsequent requests. For example, a developer can request, *via* embedding an annotation(s) within a web page, that a response generated based on a database query(s) be cached until the results of the query(s) change. The annotation(s) invokes the web server to associate a database dependency with the response to be cached and to store the invalidation information associated with the dependency, and/or the dependency itself, in a context bank. The stored invalidation information is automatically retrieved and transmitted with a subsequent query(s) to a database. As noted above, the invalidation information can be employed in an invalidation message when a change occurs to the database that renders previously queried results inconsistent and/or when an expiration period lapses.

Storing and utilizing the invalidation information in the context bank facilitates instantiating the infrastructure for associating the invalidation information with the query and saving (*e.g.*, caching) the query response. Thus, employing the stored invalidation information mitigates requiring the web server (and/or other component(s) capable of processing the query request) to have knowledge about the generation of the response. Further, employing the stored invalidation information mitigates the component generating the response from having to know how the response is going to be utilized by the web server.

According to the subject invention, the systems and methods described herein employ components to store invalidation information, to execute queries, to save results based on the queries, to receive invalidation messages and/or to invalidate saved information. Additionally, various data transfer techniques for asynchronous and synchronous communication and security techniques that mitigate the existence and/or transfer of malicious and fictitious information and messages can be employed. In practice, the systems and methods can be employed in various environments, including client-server and/or SQL based environments.

To the accomplishment of the foregoing and related ends, the invention comprises the features hereinafter fully described and particularly pointed out in the claims. The following description and the annexed drawings set forth in detail certain illustrative aspects and implementations of the invention. These are indicative, however, of but a few of the various ways in which the principles of the invention may be employed. Other objects, advantages and novel features of the invention will become apparent from the following detailed description of the invention when considered in conjunction with the drawings.

### BRIEF DESCRIPTION OF THE DRAWINGS

Fig. 1 illustrates an exemplary invalidation registration system in accordance with one aspect of the present invention.
Fig. 2 illustrates an exemplary invalidation memory management system in accordance with one aspect of the present invention.
Fig. 3 illustrates an exemplary database registration and invalidation system in accordance with one aspect of the present invention.
Fig. 4 illustrates an exemplary web based memory invalidation system in accordance with one aspect of the present invention.
Fig. 5 illustrates exemplary security techniques in accordance with one aspect of the present invention.
Fig. 6 illustrates exemplary invalidation message transfer techniques in accordance with one aspect of the present invention.
Fig. 7 illustrates an exemplary distributed invalidation system in accordance with one aspect of the present invention.
Fig. 8 illustrates an exemplary web servicing invalidation system in accordance with one aspect of the present invention.
Fig. 9 illustrates an exemplary automatic invalidation methodology in accordance with one aspect of the present invention.
Fig. 10 is a continuation of Fig. 9 in accordance with one aspect of the present invention.
Fig. 11 illustrates an exemplary change based invalidation methodology in accordance with one aspect of the present invention.
Fig. 12 illustrates an exemplary time based invalidation methodology in accordance with one aspect of the present invention.
Fig. 13 illustrates an exemplary operating system in accordance with one aspect of the present invention.

### DETAILED DESCRIPTION OF THE INVENTION

The present invention is now described with reference to the drawings, wherein like reference numerals are used to refer to like elements throughout. In the following description, for purposes of explanation, numerous specific details are set forth in order to provide a thorough understanding of the present invention. It may be evident, however, that the present invention may be practiced without these specific details. In other instances, well-known structures and devices are shown in block diagram form in order to facilitate describing the present invention.

As used in this application, the term "component" is intended to refer to a computer-related entity, either hardware, a combination of hardware and software, software, or software in execution. For example, a component may be, but is not limited to being, a process running on a processor, a processor, an object, an executable, a thread of execution, a program, and/or a computer. By way of illustration, both an application running on a server and the server can be a computer component. One or more components may reside within a process and/or thread of execution and a component may be localized on one computer and/or distributed between two or more computers. A "thread" is the entity within a process that the operating system kernel schedules for execution. Each thread has an associated "context" which is the volatile data associated with the execution of the thread. A thread's context includes the contents of system registers and the virtual address belonging to the thread's process. Thus the actual data comprising a thread's context varies as it executes.

The present invention relates to systems and methods to store results generated from database query(s) (*e.g.,* dynamic and static) in memory wherein the results can be retrieved and utilized, and invalidated when they become inconsistent (*e.g.,* database changes and expiration period lapses). The systems and methods mitigate system load and resource contention *via* reducing querying for substantially similar (*e.g.*, redundant) information. In addition, the systems and methods mitigate employing inconsistent saved results. Thus, the systems and methods provide a mechanism to query a database for information, store results in memory such as cache, employ the saved results one or more times when substantially similar results are desired, automatically invalidate the saved results when they become inconsistent, and optionally refresh the memory *via* automatically re-querying and saving.

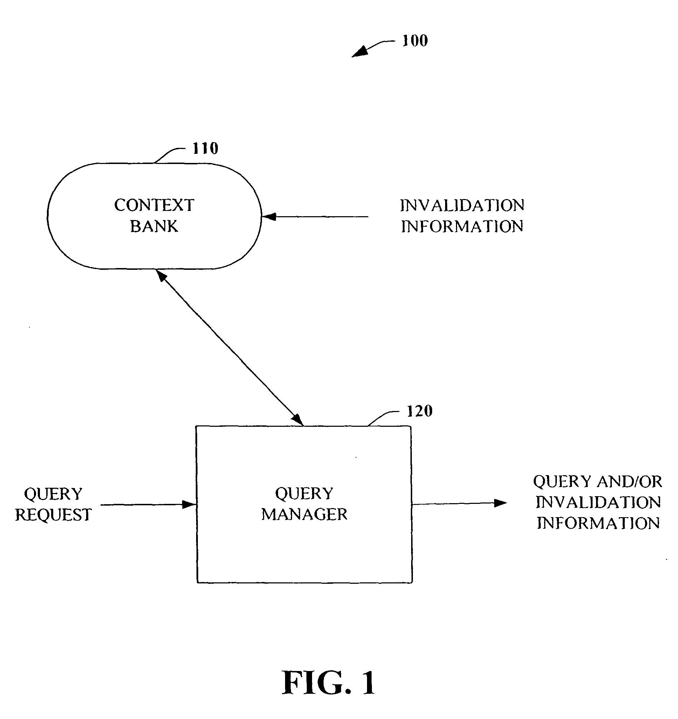

Referring to Fig. 1, an exemplary invalidation registration system 100 in accordance with an aspect of the present invention is illustrated. The invalidation registration system 100 comprises a context bank 110 and a query manager 120.

The context bank 110 can be employed to provide information to facilitate invalidating saved results when a database change occurs that would affect the saved results and/or when an expiration period lapses. For example, the context bank 110 can be utilized to store invalidation information associated with a component(s) (*e.g.*, a dependency, as described below). The invalidation information can be linked to a database *via* a database query. The results can be saved and utilized one or more times. When a change occurs to the database that would affect the query and/or the time duration expires, the corresponding invalidation information can be utilized to facilitate invalidating the saved results, for example *via* a notification, an event, a flag, an automatic invalidation of the saved results, and an automatic re-query to obtain and refresh memory with consistent results.

Typical invalidation information includes an invalidation string, service information and a time out. The invalidation string generally comprises a component identifier, a location (*e.g.,* machine name), a port, an address and/or a queue name, and can further include authentication information, encryption and protocol preferences, for example. The service information can include flags for automatic saved results removal, automatically refreshing results, automatically tagging results as invalid, and notifying the component without affecting the saved results, for example. The time out can be based on a database change, a file change, and time duration, for example. It is to be appreciated that the foregoing is illustrative and not limitative. Therefore, additional, different and/or less information can be included in accordance with an aspect of the present invention.

lnvalidation information stored in the context bank 110 is available to the query manager 120. The query manager 120 can utilize the invalidation information when executing a command and/or query. For example, the query manager 120 can obtain invalidation information from the context bank 100, and include the invalidation information with a query, wherein the invalidation information can be part of the query and/or associated with the query.

In one aspect of the present invention, a page directive (*e.g.,* an annotation(s) within a web page) can be employed to initiate the instantiation of a component (*e.g.,* a dependency object) as well as the storage of invalidation information associated with the component in the context bank 110. Employing the context bank 110 to store invalidation information facilitates establishing the infrastructure to employ the invalidation information with a query without the application invoking the query manager 120 having to know how the response may be cached.

When the query manager 120 is invoked *via* a request to query a database(s), the query manager 120 interacts with the context bank 110 to retrieve the invalidation information associated with the component. Then the query manager 120 executes the request *via* querying the database(s), wherein the invalidation information retrieved from the context bank 110 is transmitted serially and/or concurrently with the query. The query results are then retuned and utilized to generate the result to be stored, and the transmitted invalidation information remains associated with the component, the query and the queried database.

If the queried database did not change subsequent the query and prior to generating the results to be stored (*e.g.,* if the results to be stored are consistent with the database), then the results can be utilized and saved in memory for further employment. When a request that would return substantially similar results is subsequently submitted, the stored results can be utilized instead of performing another query. Thus, the present invention mitigates performing queries for substantially similar results that can reduce performance, throughput, processing and speed, and that are susceptible to resource contention.

After saving the results, a database change or lapse of time can render the saved results inconsistent. When a database change occurs that would affect the results of the aforementioned query and/or a time out expires, the invalidation information transmitted with the query can be employed to notify a component (*e.g.*, the memory manager 120) to invalidate (*e.g.*, delete and refresh) the saved results, even though the component that generated the result may no longer exist. Other components attempting to associate with the saved results can be provided with a notification indicating the saved results are invalid. Thus, the present invention mitigates employing inconsistent saved results *via* informing components and/or invalidating saved results.

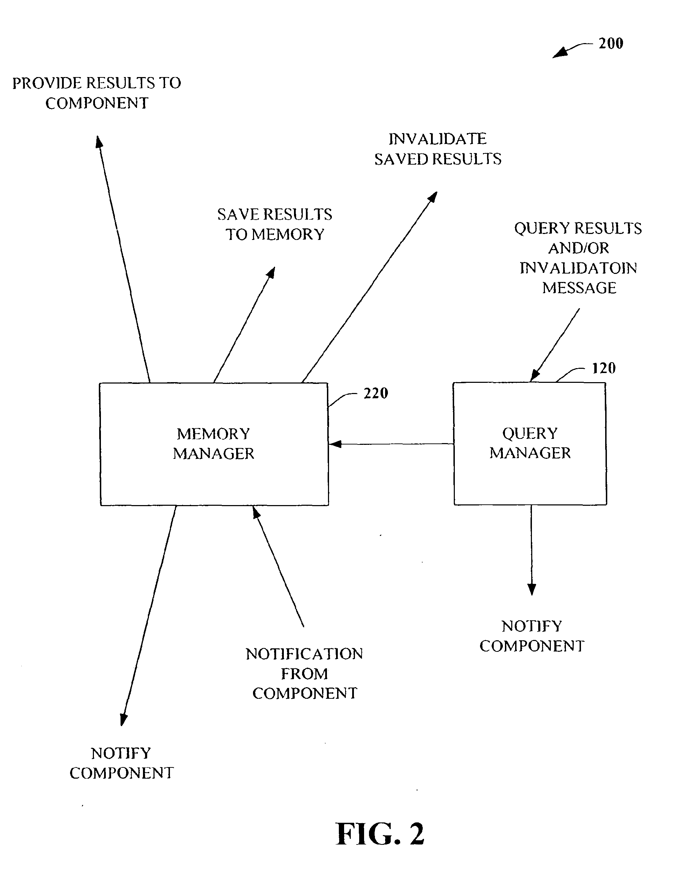

Moving to Fig. 2, an exemplary invalidation memory management system 200 in accordance with an aspect of the present invention is illustrated. The invalidation memory management system 200 comprises the query manager 120 and a memory manager 220.

In addition to the functionality noted *supra,* the query manager 120 can receive query results and/or invalidation messages for databases that change and/or expire. Generally, after the invalidation information (*e.g.,* as described above) is transmitted with a query, the query results are returned. In one aspect of the present invention, the query manager 120 receives the returned query results, and the memory manager 220 is employed to facilitate saving and/or utilizing results generated from the query results. If it is discerned that the database changed and/or expiration period lapsed prior to generating the results to be stored, the memory manager 220 can provide the results to the component without saving the results to memory. If the data is consistent (*e.g.,* no database change) and the expiration period has not expired, the memory manager 220 can provide the results to the component and/or save to memory, serially and/or concurrently. Saved results can be accessed by the component(s) when a substantially similar query is requested; thus mitigating performing substantially similar queries, which consume resources and reduce performance.

It is to be appreciated that the returned results can include raw data, transformed data (*e.g.*, denormalized, aggregations, summaries, pivot tables, objects generated from the raw data, and/or partial or complete web responses), and/or queryable data (*e.g.,* data sets that can be utilized *via* subsequent queries to obtain a subset thereof). Furthermore, it is to be appreciated that various techniques can be employed to save results to memory. For example, in a first approach, substantially all of the returned results (*e.g.*, a complete web response) can be saved. In a second approach, a portion of the returned results (*e.g.*, a partial page) is saved to memory. For example, the portion that may be common to a subsequent request(s) is saved. In another example, the results that are common to multiple requests are saved. Then, a local query against the common results retrieved from memory can return the data associated with a request. In a third approach, personalized results can be obtained through a query or some other means and common results can be saved to memory and utilized. It is to be appreciated that the exemplary illustrations depicted above are provided for explanatory purposes and do not limit the invention.

After receiving an invalidation message, the query manager 120 can facilitate routing a database change notification to the component(s) and/or invalidate saved results. In one aspect of the present invention, the query manager 120 notifies the component(s), and the component decides the next action. For example, the component can employ the memory manager 220 to invalidate the saved results. Alternatively, the query manager 120 employs the memory manger 220, wherein the memory manager 220 can invalidate the saved results and/or notify the component. It is to be appreciated that the component that initiated the query and the corresponding save may no longer exist when the saved results are invalidated.

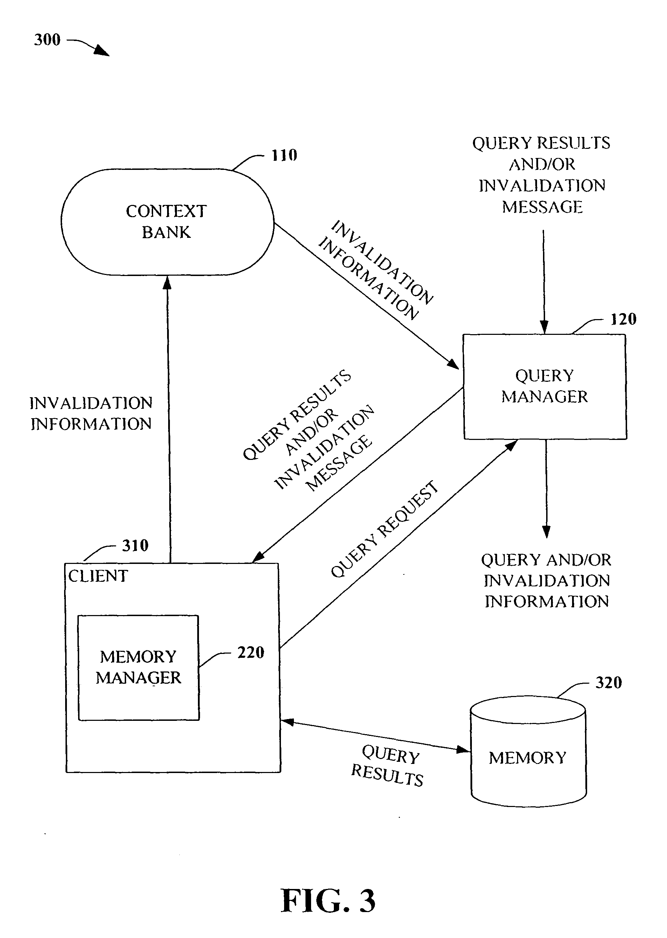

Referring now to Fig. 3, an exemplary database registration and invalidation system 300 is illustrated in accordance with an aspect of the present invention. The database registration and invalidation system 300 comprises the context bank 110, the query manager 120, a memory manager 220, and optionally a client 310, and a memory 320. It is to be appreciated that more than one memory manager 220, client 310 and memory 320 can be employed; however, for brevity a client instance is described in the following.

As noted *supra,* the context bank 110 can store invalidation information (*e.g.*, as described above) for components that can be employed to provide information for invalidating saved results when a database change occurs that would affect the saved results and/or when an expiration period lapses. In one aspect of the present invention, the client 310 can provide invalidation information - an identifier, a machine name, a port, an address, a database name, an indication to automatically invalidate inconsistent saved results, an indication to automatically refresh inconsistent results, and a time out (*e.g.*, invalidate on a database change, a file change and a duration of time) - to the context bank 110.

When the client 310 invokes the query manager 120 to query a database, the query manager 120 receives associated invalidation information from the context bank 110 (as depicted) and/or retrieves associated invalidation information from the context bank 110 (not shown). The query manager 120 can then perform the query and provide the invalidation information. It is to be appreciated that the query manager 120 can query a dynamic and/or static database in accordance with an aspect of the invention.

The query manager 120 can accept the query results, and transmit the results to the client 310. It is to be appreciated that the present invention affords synchronous and asynchronous message delivery. In synchronous message delivery, a database change can be blocked until delivery of the invalidation message and/or invalidation of the inconsistent results. Synchronous delivery mitigates data inconsistency *via* ensuring a database change does not occur between committing the change and receiving the invalidation message and/or invalidating the results. In asynchronous message delivery, a database change can be committed prior to delivering the invalidation message and/or prior to invalidating the inconstant results. Asynchronous delivery mitigates delivery latency.

After receiving the query results, the queried database(s) can then be probed, utilizing various techniques, to ascertain whether a change occurred after the query but prior to generating the results to be stored. If a change occurred, the client 310 can utilize the results without invoking the memory manager 220. If no change occurred, the client 310 can utilize the results and employ the memory manager 220 to store the results in the memory 320 (*e.g.*, local, remote, high-speed, HTTP and shared). Subsequent requests that would return substantially similar results can utilize the saved results from memory 320 instead of performing a query until the saved results become inconsistent.

In another aspect of the invention, various techniques are employed to facilitate determining whether to save results. If, for example, it is determined that the results are common to a plurality of requests and change infrequently, then the results are saved. However, if it is determined that the results change frequently and/or are not frequently utilized, and the cost of saving is relatively expensive, then the results are not saved. In yet another aspect of the present invention, various techniques are employed to mitigate memory issues. For example, if the memory 320 is full, then the results can be saved employing a First In First Out (FIFO) or First In Last Out (FILO) approach, an age based approach wherein the oldest information is discarded first, a usage approach wherein the least used, or longest since last used, information is discarded first, a size based approach and a key based approach. In another example, results are not saved until enough "free" memory is available. Other approaches, or variations of these approaches, may consider the amount of time and/or resources required to generate the result.

Once a change occurs to the database that would affect the results and/or the expiration period lapses, an invalidation message is dispatched to the system 300. Typically, the invalidation message comprises at least a portion of the invalidation information. The query manager 120 can receive invalidation messages. The query manager 120 then notifies the client 310 (and/or any other component registered to receive an invalidation message). The client 310 can then invoke the memory manager 220 to invalidate (*e.g.,* remove, erase, write over and move) saved results. If automatic refresh results were indicated in the invalidation information, a subsequent query is performed to generate new results that can be saved in memory 320 and utilized by components like client 310. Employing the foregoing technique can mitigate removing inconsistent results *via* saving the new results over the inconsistent results.

It is to be appreciated that the invalidation registration system 100, the invalidation memory management system 200, and the database registration and invalidation system 300 can further employ components to register databases (*e.g.*, database tables, data tables and tables), to detect changes to databases, to determine if changed databases are registered, and/or to dispatch messages indicating that a registered database changed.

While Figs. 1-3 are block diagrams illustrating components for the systems 100-300, it is to be appreciated that the context bank 110, the query manager 120, the memory manager 220, the client 310, and the memory 320 can be implemented as one or more computer components, as that term is defined herein. Thus, it is to be appreciated that computer executable components operable to implement the system 100-300, the context bank 110, the query manager 120, the memory manager 220, the client 310, and the memory 320 can be stored on computer readable media including, but not limited to, an ASIC (application specific integrated circuit), CD (compact disc), DVD (digital video disk), ROM (read only memory), floppy disk, hard disk, EEPROM (electrically erasable programmable read only memory) and memory stick in accordance with the present invention.

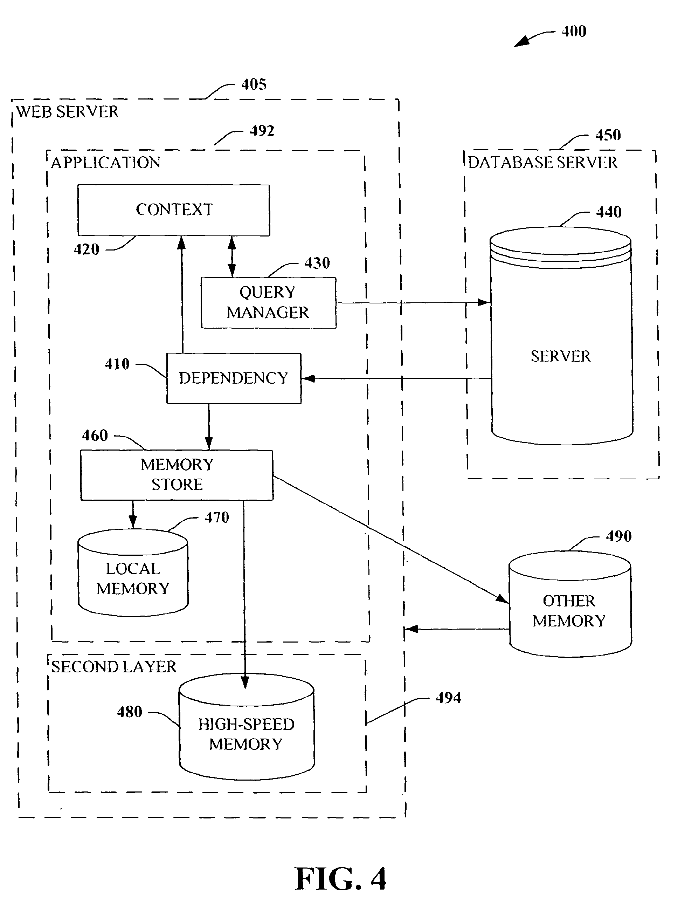

Proceeding to Fig. 4, an exemplary web based memory invalidation system 400 in accordance with an aspect of the present invention is illustrated. The web based memory invalidation system 400 comprises a web server 405, dependency component 410, a context component 420, a query manager 430, a server 440, a database server 450, a memory store 460, a local memory 470, a high-speed memory 480, other memory 490 (*e.g.,* remote high speed memory), an application 492, and an ancillary layer 494.

The web sever 405 can access a web page(s) that includes a page directive (*e.g.*, an annotation(s), as described *supra*). The page directive can be utilized to specify that the web response will be saved, and that the saved response should be invalidated when an associated database changes and/or when an expiration period lapses. The web server 405 can utilize the page directive, invoke the dependency component 410 (*e.g.,* an object or derived object), and facilitate storage of invalidation information in the context component 420.

The dependency component 410 obtains a unique identifier, for example a globally unique identifier, or GUID, to identify the cached response to be associated with subsequent queries. The dependency component 410 provides the unique identifier and various other invalidation information (*e.g.*, as described *supra*) to the context component 420. Generally, invalidation information includes an invalidation string (*e.g.*, the GUID, a machine name, a port, an address and a queue name, and optionally authentication information, encryption and protocol preferences), service information and a time out (*e.g.*, on database change and on time expiration). However, the foregoing is illustrative and does not limit the invalidation information.

When the query manager 430 (*e.g.*, query manager 110) is invoked to query a database, the query manager 430 interfaces with the context component 420 and obtains associated invalidation information. The query engine 420 then transmits the query and the invalidation information to the server 440 (*e.g.*, dynamic and static) within the database server 450. The query is performed on the database 440 with the results returned to the application 492. The invalidation information remains with the database server 450, and provides the association between the dependency component 410 on the web server 405, and the results returned by the server 440.

After receiving the query results, the web server generates the whole or partial response. The web server 405 can poll the dependency component 410 to determine whether a database change occurred while the response was being generated, and then decide whether to save the results. If it is determined to save the results, then the web server 405 can employ the memory store 460 to facilitate saving the results to the local memory 470 (*e.g.,* cache), the high-speed memory 480 (*e.g.*, cache) and/or other memory 490. Typically, the local memory 470 can be associated with the application 490 and the high-speed memory 480 can be associated with the ancillary layer 494 (*e.g.*, HTTP.sys). Otherwise, the response can be utilized and/or discarded without saving.

When a database change occurs that will affect the saved web response, and/or when an expiration period lapses, the server 440 transmits an invalidation message to the dependency component 410. The dependency component 410 then signals the change (*e.g., via* raising an event and setting a flag). The memory store 460 receives this signal and invalidates the response. Optionally, when an invalidation message is received, an automatic refresh can be employed to perform a query to obtain and save consistent results. The automatic refresh can write over inconsistent results and/or remove inconsistent results prior to saving the consistent results.

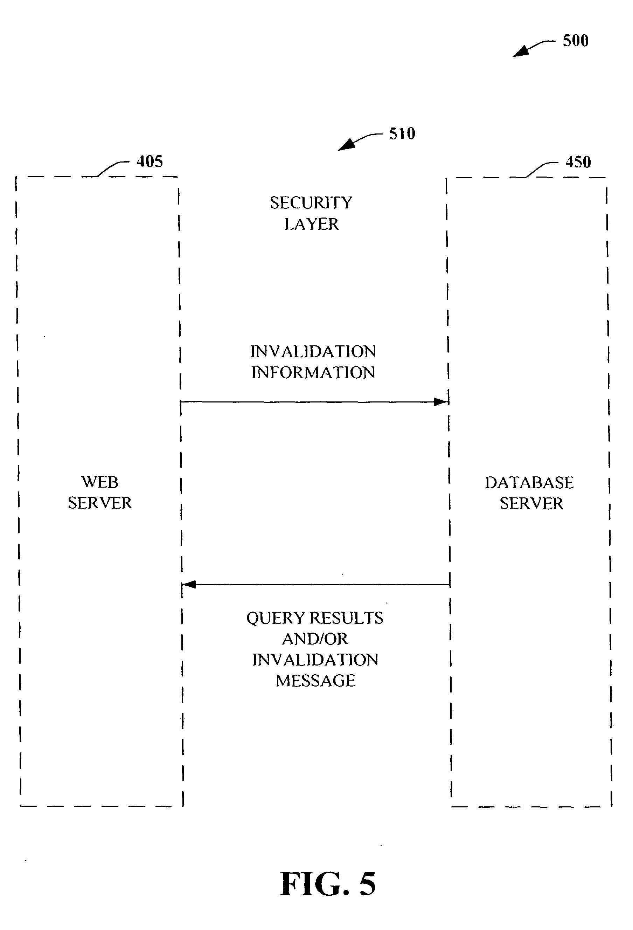

Next at Fig. 5, exemplary security techniques in accordance with an aspect of the present invention are illustrated. A system 500 comprises the web server 405, the database server 450 and a security layer 510 that operatively couples the web server 496 and the database server 450.

As noted above, the query engine 430 interfaces with the context component 420 to obtain invalidation information after receiving a query request. Then the query engine 420 sends the query and the invalidation information from the web server 405 to the server 440 within the database server 450.

The invalidation information, as described previously, can include a unique identifier such as a globally unique identifier, or GUID. The GUID affords a security mechanism that can be employed to mitigate malicious attempts to simulate database changes and time period expirations. For example, in one aspect of the present invention the GUID is created at runtime when a database query registration request is received, thereby mitigating the opportunity to "guess." or mimic the GUID. The GUID is then used to identify the set of saved results to be invalidated.

If it is determined that the GUID is invalid (*e.g.*, it does not identify a set of saved results to be invalidated), the invalidation request can be ignored and/or discarded along with the GUID, for example. In another example, the fictitious invalidation request can be forwarded to the system administrator and utilized to trace the origination location.

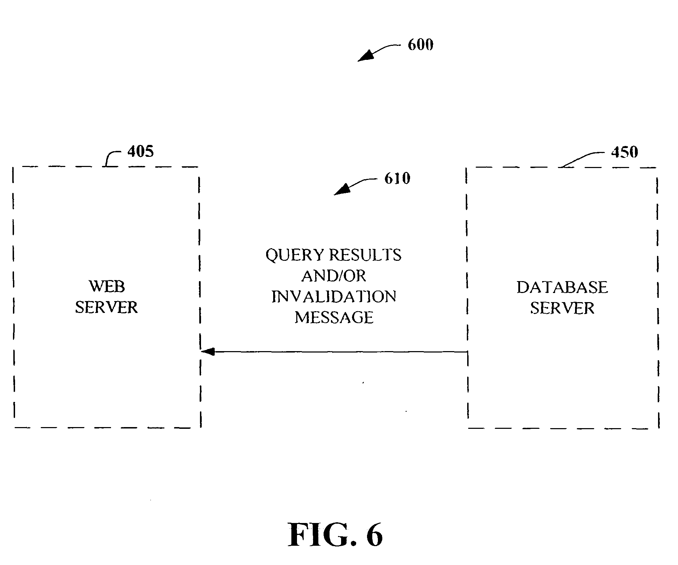

Fig. 6 illustrates exemplary invalidation message transfer techniques in accordance with an aspect of the present invention. The system 600 comprises the web server 405, the database server 450 and a communication interface 610 operatively coupling the web server 405 and the database server 450.

After a query request is received, the query engine 430 obtains invalidation information from the context component 420 and sends the query and the invalidation information to the database server 450. The query is executed with the results transmitted to the web server 405, wherein the results can be saved in memory and utilized more than once to mitigate performing substantially similar queries.

After the results are returned from the database server 450, the invalidation information remains with the database server 450, and can be employed when a database change occurs to locate associated saved results in the web server 405. It is to be appreciated that various mechanisms can be employed to store the invalidation information in the database server 450, and that various techniques can be utilized to match the invalidation information with a changed database and dispatch the invalidation message.

When a database change occurs, an invalidation message is constructed and transmitted over communication interface 610, from the database server 450 to the web server 496. The invalidation message can include at least a portion of the invalidation information, for example.

It is to be appreciated that the database change can be committed and/or held back. For example, in one aspect of the present invention, an asynchronous invalidation message transfer model can be employed, wherein a database change is committed regardless of whether an invalidation message is transmitted over communication interface 610 and/or whether saved results have been invalidated.

In another aspect of the invention, a synchronous invalidation message transfer model can be employed, wherein a database change is blocked until an invalidation message is transmitted over communication interface 610 and/or until saved results have been invalidated. An asynchronous model affords scalability, whereas a synchronous model affords reliability. The foregoing is provided to facilitate understanding and does not limit the invention, for example other techniques such as various other push and/or pull approaches can also be employed in accordance with the invention.

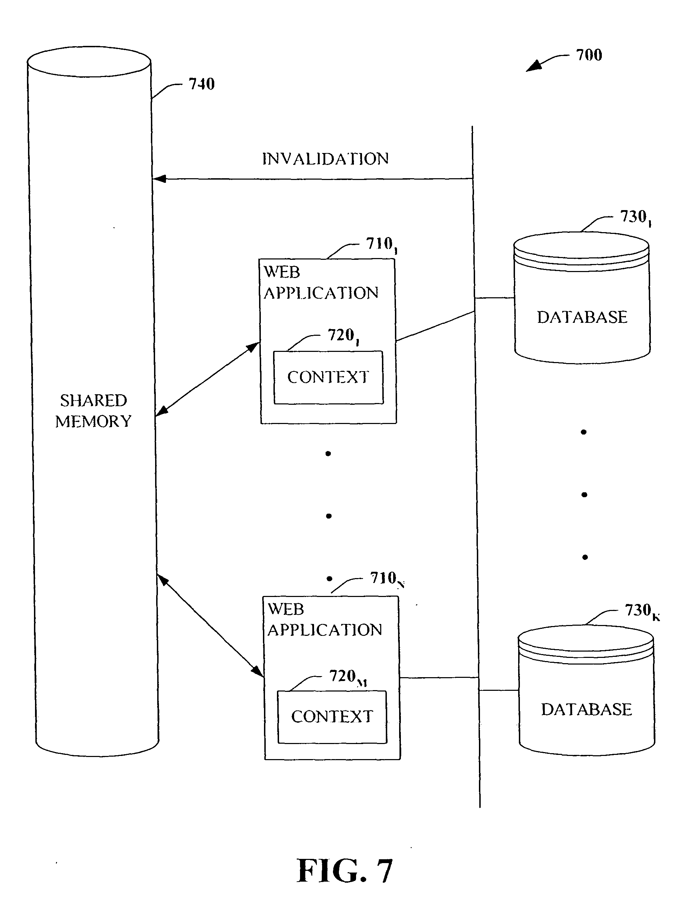

Fig. 7 illustrates an exemplary distributed invalidation system 700 in accordance with an aspect of the present invention. The invalidation system 700 comprises a first web application 710₁ through an Nth web application 710_{N}, N being an integer greater than or equal to one, a first context component 720₁ through an Mth context component 710_{M}, M being an integer greater than or equal to one, a first database 730₁ through an Kth database 730_{K}, K being an integer greater than or equal to one, and a shared memory 740.

The first web application 710₁ through the Nth web application 710_{N} can be referred to collectively as the web applications 710, the first context component 720₁ through the Mth context component 720_{M} can be referred to collectively as the context components 720, and the first database 730₁ through the Kth database 730_{K} can be referred to collectively as the databases 730.

The web applications 710 (*e.g.*, object instances) can be employed to query databases to fulfill a user request(s). Typically, upon instantiation of the web applications 710 invalidation information associated with the web applications 710 is assembled and stored in respective context components 720 (*e.g.*, context bank 110). Invalidation information generally includes a unique identifier, an invalidation string, service information and an expiration period, as described *supra*; however, the invalidation information is not so limited.

When a query request is received by at least one of the web applications 710, the corresponding context bank is employed to obtain the associated invalidation information. Then, the query and the invalidation information are transmitted *via* a communication protocol (*e.g.*, Ethernet and Firewire) to the databases 730. It is noted that a query can employ one or more of the databases 730 to fulfill a user request.

After the query is performed, the results can be returned to the at least one web applications 710. To ensure that the results are consistent, the databases 730 can be checked to determine if a change occurred that would affect the results subsequent the query but prior to generating the result to be stored. If it is determined that a change occurred, the results can be utilized and/or discarded. If it is determined that the results are consistent, the results can be utilized and/or saved in memory, for example shared memory 740. Saved results are available to be employed one or more times. In addition, one more of the web applications 710 can employ the saved results serially and/or concurrently. Thus, the present invention further mitigates more than one of the web applications 710 performing queries for substantially similar results.

When a database change occurs to at least one of the databases 720 and/or when an expiration period lapses, at least one of the databases 720 transmits an invalidation message to one or more of the web applications 710 and/or the shared memory 740. It is to be appreciated that an (*e.g.,* one) invalidation message can comprise more than one web application address and/or other information (*e.g.*, other invalidation information) in order to inform more than one web application that is affected by the change.

In another aspect of the invention, more than one invalidation message can be transmitted, wherein an invalidation message is associated with and transmitted to a web application and/or the shared memory 740. In yet another aspect, the invalidation message can be broadcast such that substantially all of the web applications 710 and/or the shared memory 740 can receive the invalidation message. The web applications 710 can then decide whether to accept and/or act on the invalidation message. It is to be appreciated that providing the invalidation message to the shared memory 740 mitigates having to provide the invalidation message to a web application. For example, the web application(s) that initiated the request does not have to exist to invalidate the saved results. In addition, any application(s) that shared that saved results do not have to exist in order to invalidate the saved results. Thus, the present invention provides a mechanism to discard inconsistent results and/or free shared memory even when the initiating application and/or any sharing application no longer exists.

After receiving the invalidation message, the saved results can then be invalidated. For example, the saved results can be removed from memory or tagged as inconsistent. Optionally, an automatic refresh can be employed to perform a subsequent query to obtain consistent results to save to the memory. The automatic refresh can further re-send the invalidation information with the subsequent query in order to automatically invalidate the refreshed results they become inconsistent.

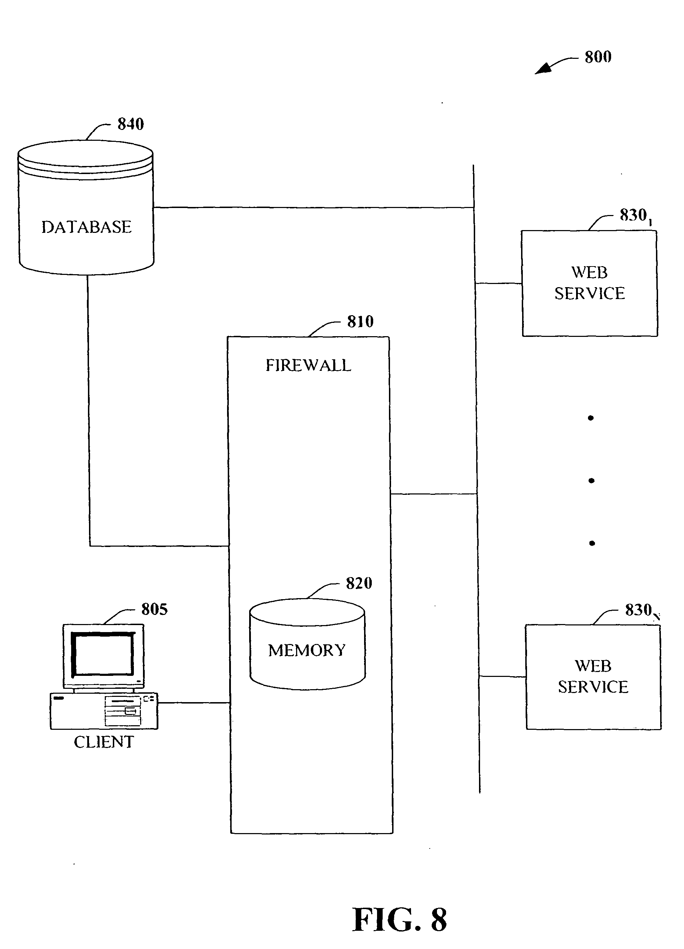

Fig. 8 illustrates an exemplary web servicing invalidation system 800 in accordance with an aspect of the present invention. The web servicing invalidation system 800 comprises a client 805, a firewall 810, a memory 820, a first web service 830₁ through an Nth web service 830_{N}, N being an integer greater than or equal to one, and a database 840. The first web service 830₁ through the Nth web service 830_{N} can be referred to collectively as the web services 830.

The client 805 interfaces with the web service 830 through the firewall 810. Access to the web services 830 can be controlled by the firewall 810. For example, the firewall 810 can limit access and/or deny access to the web services 830 by the client 805. Additionally, the firewall 810 can be employed to limit access by the client 805 to the database 840 and the memory 820. It is to be appreciated that client access to the web servers 830, the database 840 and/or the memory 820 can be mutually exclusive. For example, the client 805 can have full access to the web servers 830 without access to the database 840 and/or the memory 820. However, the client 805 could have full or no access to the web servers 830, the database 840 and/or the memory 820.

The firewall 810 can further be employed to limit web service access to the database 840 and/or the results saved in memory 820. In one aspect of the present invention, one or more of the web services 830 can transmit a query (*e.g.*, initiated by the client 805), invalidation information (*e.g.,* as described above), and other information such as routing information to the database 840. If the one or more web services 830 have clearance, the transmitted information can be conveyed to the database 840. In another aspect of the present invention, the one or more of the web services 830 can transmit a query, invalidation information, and other information to the database 840 without conveying the information through the firewall 810.

After the query is performed, the database 840 returns the query results, which are utilized to generate a result to be stored. In one aspect of the invention, the result is returned to the firewall 810, wherein the firewall 810 employs a mechanism (*e.g.*, memory manager 120) to save the result in memory 820. In another aspect of the present invention, the result can be returned to the web services 830 (*e.g., via* through and/or around the firewall 810). The web services 830 can then store the result in the memory 820, where the result can be available to web services 830 with access to the memory 820, and provide the result to the client 805.

The saved results can then be accessible to the web services 830 that have clearance to employ the memory 820. For example, a web service 830_{N} can send a query that would return results that are substantially similar to and/or a subset of the results saved in memory 820. If the web service 830_{N} has access to the memory 820, the web service 830_{N} can utilize the saved results instead of performing a query. If the web service 830_{N} does not have access to the memory 820, then a query is performed.

When a database change occurs that will affect the results saved in memory 840 and/or when an expiration period lapses, the database 840 can transmit an invalidation message to the firewall 810. If the invalidation message has clearance, the message can be utilized to invalidate inconsistent results in the memory 820. In one aspect of the invention, a notification can additionally be sent to the web services 830 to notify the web services 830 that the results have been invalidated. In another aspect, instead of transmitting a notification to the web services 830, the web services 830 can periodically poll the memory 820 to determine if the results are still consistent, for example. In another example, when the web services 830 transmit a query and invalidation information, the memory 820 is searched to determine whether similar results are saved in the memory 820 and whether the similar results are consistent.

An automatic refresh can be employed to automatically re-query for consistent results and re-send invalidation information to invalidate when the next database change occurs and/or when a time period corresponding to the database data (results) expires.

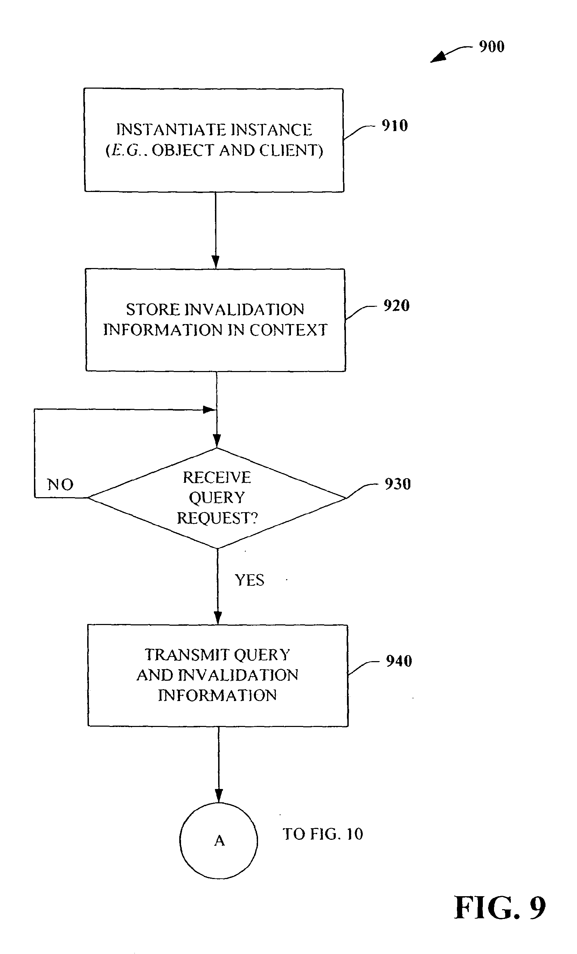

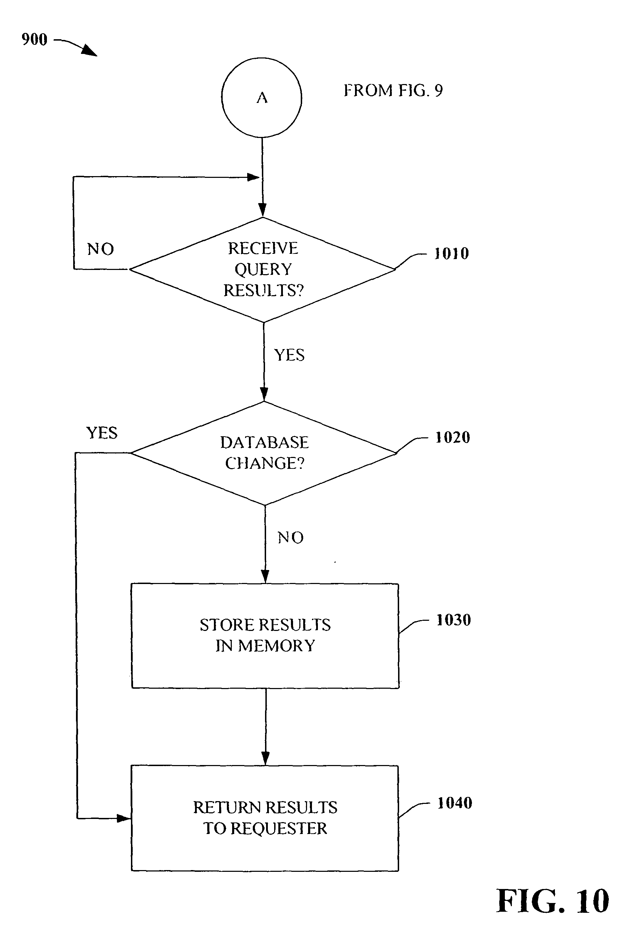

Figs. 9-12 illustrate methodologies in accordance with the present invention. For simplicity of explanation, the methodologies are depicted and described as a series of acts. It is to be understood and appreciated that the present invention is not limited by the acts illustrated and/or by the order of acts, for example acts can occur in various orders and/or concurrently, and with other acts not presented and described herein. Furthermore, not all illustrated acts may be required to implement a methodology in accordance with the present invention. In addition, those skilled in the art will understand and appreciate that a methodology could alternatively be represented as a series of interrelated states (*e.g.,* state diagram) or events.

Proceeding to Fig. 9, an exemplary automatic invalidation methodology 900 is illustrated. At reference numeral 910, an instance is instantiated (*e.g.*, an object, a derived object, a client, an application, a client application and a dependency instance). At 920, invalidation information associated with the instance is stored in a context. Invalidation information typically comprises an invalidation string, service information and a time out, as described *supra.* It is to be appreciated that more than one instance can be instantiated, and more than one instance can store invalidation information in a similar context.

At reference numeral 930, the methodology waits to receive a request to perform a query. Once a request is received, the invalidation information stored in the context and associated with the instance is retrieved. Then at 940, the query and the invalidation information are transmitted, for example to the dynamic and/or static server where the database(s) resides.

Referring now to Fig. 10, a continuation of Fig. 9 in accordance with an aspect of the present invention is illustrated. Proceeding to reference numeral 1010, the methodology 900 waits for the results of the query. After the results are received and processed, the database(s) utilized in the query is examined at 1020 to ascertain whether a change occurred between the time of the query and the generation of the cacheable result. This ensures that the result is consistent.

If change did not occur between the time of the query and the reception of the results, then the results are stored in memory at 1030 and provided to the instance at 1040. The saved results are available for further employment, for example to mitigate performing queries that would return similar results. If at 1020 it is determined that a change did occur between the query and the generation of the results to be stored, then at 1040 the results are typically provided to the instance and not saved. However, the instance can decide to store and utilize inconsistent results. Various techniques can be employed to notify other instances that the results are inconsistent. For example, a flag could be set to raise an event whenever an instance attempts to employ inconsistent results.

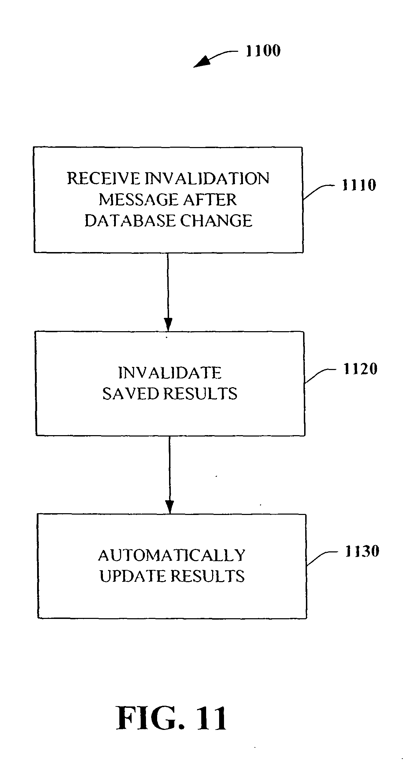

Next at Fig. 11, an exemplary data change based invalidation methodology 1100 in accordance with an aspect of the invention is illustrated. Proceeding at 1110, a database change occurs, and an invalidation message is transmitted and received. The invalidation message typically includes a portion of the invalidation information. For example, the unique identifier can be included to facilitate identifying the set of inconsistent results to be invalidated.

It is to be appreciated that the database change and the transmission/reception can be synchronized, wherein the database change is committed when the invalidation message is received and/or acted on. In another example, an asynchronous technique is employed wherein the database change is committed regardless of whether the transmission occurred and/or message was received.

At 1120, the saved results are invalidated. It is to be appreciated that various methods to invalidate the results can be employed. For example, the results can be removed from memory, tagged as invalid and/or overwritten. At 1130, an automatic refresh can be performed to query for current and consistent results, and re-register for an invalidation message for a subsequent database change.

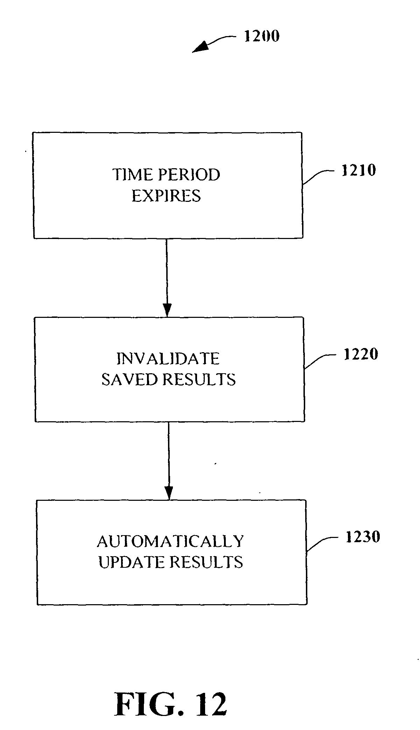

Referring now to Fig. 12, another exemplary time based invalidation methodology in accordance with an aspect of the invention is illustrated. Proceeding at 1210, the time period included in the invalidation information expires. Subsequently, an invalidation message is transmitted and received. The invalidation message can include a portion of the invalidation information. For example, the unique identifier can be included to facilitate identifying the set of inconsistent results to be invalidated. At 1220, the saved results are invalidated (*e.g.,* similar to above). At 1210, an automatic refresh can be performed to query for current and consistent results, and re-register for an invalidation message for a subsequent expiration.

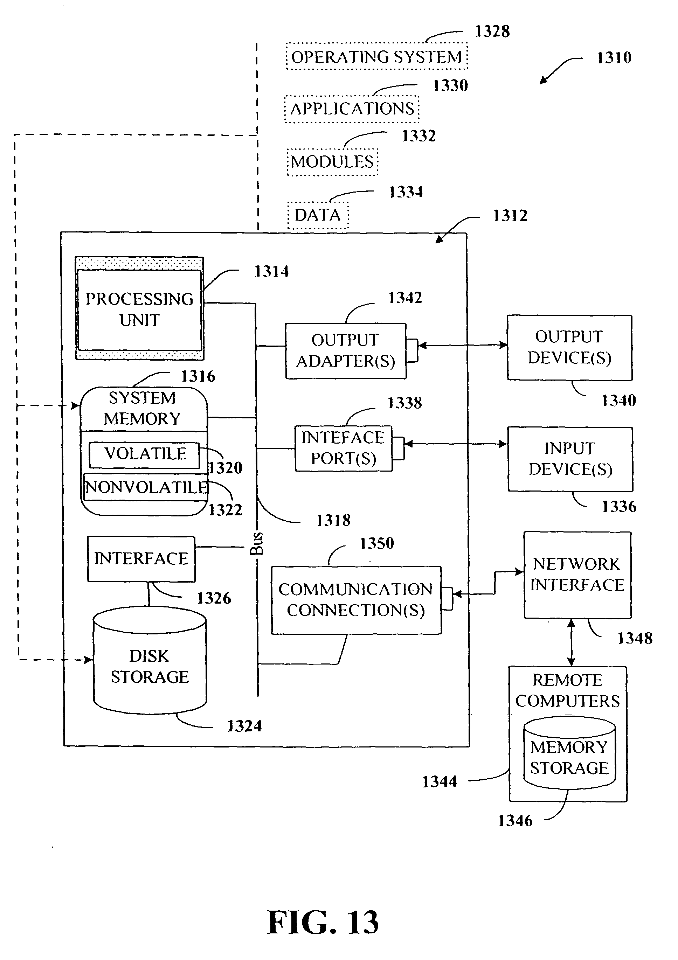

In order to provide additional context for various aspects of the present invention, Fig. 13 and the following discussion are intended to provide a brief, general description of suitable operating environment 1310 in which various aspects of the present invention may be implemented. While the invention is described in the general context of computer-executable instructions, such as program modules, executed by one or more computers or other devices, those skilled in the art will recognize that the invention can also be implemented in combination with other program modules and/or as a combination of hardware and software. Generally, however, program modules include routines, programs, objects, components, data structures, *etc.,* that perform particular tasks or implement particular data types. The operating environment 1310 is only one example of a suitable operating environment and is not intended to suggest any limitation as to the scope of use or functionality of the invention. Other well known computer systems, environments, and/or configurations that may be suitable for use with the invention include but are not limited to, personal computers, hand-held or laptop devices, multiprocessor systems, microprocessor-based systems, programmable consumer electronics, network PCs, minicomputers, mainframe computers, distributed computing environments that include the above systems or devices, and the like.

With reference to Fig. 13, an exemplary environment 1310 for implementing various aspects of the invention includes a computer 1312. The computer 1312 includes a processing unit 1314, a system memory 1316, and a system bus 1318. The system bus 1318 couples system components including, but not limited to, the system memory 1316 to the processing unit 1314. The processing unit 1314 can be any of various available processors. Dual microprocessors and other multiprocessor architectures also can be employed as the processing unit 1314.

The system bus 1318 can be any of several types of bus structure(s) including the memory bus or memory controller, a peripheral bus or external bus, and/or a local bus using any variety of available bus architectures including, but not limited to, an 8-bit bus. Industrial Standard Architecture (ISA), Micro-Channel Architecture (MSA), Extended ISA (EISA), Intelligent Drive Electronics (IDE), VESA Local Bus (VLB), Peripheral Component Interconnect (PCI), Universal Serial Bus (USB), Advanced Graphics Port (AGP), Personal Computer Memory Card International Association bus (PCMCIA), and Small Computer Systems Interface (SCSI).

The system memory 1316 includes volatile memory 1320 and nonvolatile memory 1322. The basic input/output system (BIOS), containing the basic routines to transfer information between elements within the computer 1312, such as during start-up, is stored in nonvolatile memory 1322. By way of illustration, and not limitation, nonvolatile memory 1322 can include read only memory (ROM), programmable ROM (PROM), electrically programmable ROM (EPROM), electrically erasable ROM (EEPROM), or flash memory. Volatile memory 1320 includes random access memory (RAM), which acts as external cache memory. By way of illustration and not limitation, RAM is available in many forms such as synchronous RAM (SRAM), dynamic RAM (DRAM), synchronous DRAM (SDRAM), double data rate SDRAM (DDR SDRAM). enhanced SDRAM (ESDRAM), Synchlink DRAM (SLDRAM), and direct Rambus RAM (DRRAM).

Computer 1312 also includes removable/nonremovable, volatile/nonvolatile computer storage media. Fig. 13 illustrates, for example a disk storage 1324. Disk storage 1324 includes, but is not limited to, devices like a magnetic disk drive, floppy disk drive, tape drive, Jaz drive, Zip drive, LS-100 drive, flash memory card, or memory stick. In addition, disk storage 1324 can include storage media separately or in combination with other storage media including, but not limited to, an optical disk drive such as a compact disk ROM device (CD-ROM), CD recordable drive (CD-R Drive), CD rewritable drive (CD-RW Drive) or a digital versatile disk ROM drive (DVD-ROM). To facilitate connection of the disk storage devices 1324 to the system bus 1318, a removable or non-removable interface is typically used such as interface 1326.

It is to be appreciated that Fig 13 describes software that acts as an intermediary between users and the basic computer resources described in suitable operating environment 1310. Such software includes an operating system 1328. Operating system 1328, which can be stored on disk storage 1324, acts to control and allocate resources of the computer system 1312. System applications 1330 take advantage of the management of resources by operating system 1328 through program modules 1332 and program data 1334 stored either in system memory 1316 or on disk storage 1324. It is to be appreciated that the present invention can be implemented with various operating systems or combinations of operating systems.

A user enters commands or information into the computer 1312 through input device(s) 1336. Input devices 1336 include, but are not limited to, a pointing device such as a mouse, trackball, stylus, touch pad, keyboard, microphone, joystick, game pad, satellite dish, scanner, TV tuner card, digital camera, digital video camera, web camera, and the like. These and other input devices connect to the processing unit 1314 through the system bus 1318 *via* interface port(s) 1338. Interface port(s) 1338 include, for example, a serial port, a parallel port, a game port, and a universal serial bus (USB). Output device(s) 1340 use some of the same type of ports as input device(s) 1336. Thus, for example, a USB port may be used to provide input to computer 1312 and to output information from computer 1312 to an output device 1340. Output adapter 1342 is provided to illustrate that there are some output devices 1340 like monitors, speakers, and printers among other output devices 1340 that require special adapters. The output adapters 1342 include, by way of illustration and not limitation, video and sound cards that provide a means of connection between the output device 1340 and the system bus 1318. It should be noted that other devices and/or systems of devices provide both input and output capabilities such as remote computer(s) 1344.

Computer 1312 can operate in a networked environment using logical connections to one or more remote computers, such as remote computer(s) 1344. The remote computer(s) 1344 can be a personal computer, a server, a router, a network PC, a workstation, a microprocessor based appliance, a peer device or other common network node and the like, and typically includes many or all of the elements described relative to computer 1312. For purposes of brevity, only a memory storage device 1346 is illustrated with remote computer(s) 1344. Remote computer(s) 1344 is logically connected to computer 1312 through a network interface 1348 and then physically connected *via* communication connection 1350. Network interface 1348 encompasses communication networks such as local-area networks (LAN) and wide-area networks (WAN). LAN technologies include Fiber Distributed Data Interface (FDDI). Copper Distributed Data Interface (CDDI), Ethernet/IEEE 802.3, Token Ring/IEEE 802.5 and the like, WAN technologies include, but are not limited to, point-to-point links, circuit switching networks like Integrated Services Digital Networks (ISDN) and variations thereon, packet switching networks, and Digital Subscriber Lines (DSL).

Communication connection(s) 1350 refers to the hardware/software employed to connect the network interface 1348 to the bus 1318. While communication connection 1350 is shown for illustrative clarity inside computer 1312, it can also be external to computer 1312. The hardware/software necessary for connection to the network interface 1348 includes, for exemplary purposes only, internal and external technologies such as, modems including regular telephone grade modems, cable modems and DSL modems. ISDN adapters, and Ethernet cards.

What has been described above includes examples of the present invention. It is, of course, not possible to describe every conceivable combination of components or methodologies for purposes of describing the present invention, but one of ordinary skill in the art may recognize that many further combinations and permutations of the present invention are possible. Accordingly, the present invention is intended to embrace all such alterations, modifications and variations that fall within the spirit and scope of the appended claims. Furthermore, to the extent that the term "includes" is used in either the detailed description or the claims, such term is intended to be inclusive in a manner similar to the term "comprising" as "comprising" is interpreted when employed as a transitional word in a claim.

## Claims

1. A memory invalidation registration system comprising:
a context bank to store invalidation information;
a query manager to submit database queries and associated invalidation information from the context bank to a database; and
a memory to store results based on database queries, wherein the associated invalidation information is maintained by the database.

2. The system of claim 1, the invalidation information comprising at least one of an invalidation string, service information, and an expiration period.

3. The system of claim 2, the invalidation string comprising at least one of a unique identifier, a machine name, a port, an address, and a queue name.

4. The method of claim 3, the invalidation string further comprising at least one of authentication, encryption and protocol information.

5. The system of claim 1, the query manager operative with the context bank in order to obtain invalidation information to submit with the queries.

6. The system of claim 1, the invalidation information associated with a stored result associated with a plurality of queries.

7. The system of claim 1, the query manager receiving invalidation messages after at least one of a database change that would affect the stored results and a time expiration as defined in the invalidation information.

8. The system of claim 7, the database change being blocked until the change is synchronously delivered.

9. The system of claim 7, the database change completing while the change is asynchronously delivered.

10. The system of claim 1, automatically invalidating saved results in the memory after the invalidation message is received.

11. The system of claim 1, automatically re-querying the database to update saved results in memory after the invalidation message is received.

12. The system of claim 3, the unique identifier generated at runtime to define the association between the saved results and the source queries.

13. The system of claim 12, the unique identifier employed to group one or more queries with a saved result.

14. The system of claim 12, the unique identifier employed as a security mechanism to mitigate at least one of fictitious invalidation information and fictitious invalidation messages.

15. The system of claim 1, further comprising a memory manager to coordinate result storage and invalidation.

16. The system of claim 10, the automatic invalidation comprising at least one of removing the inconsistent results from memory, writing over the inconsistent results in memory and tagging the inconsistent results in memory.

17. The system of claim 1, the memory comprising cache memory.

18. The system of claim 1, the memory shared by a plurality of components.

19. The system of claim 1, employed with an SQL based environment.

20. The system of claim 1, further comprising at least one of an annotation and a page directive to request that the results be stored in memory for utilization by subsequent requests and invalidated when the stored results becomes inconsistent with the database.

21. The system of claim 1, the context bank facilitating conveyance of the invalidation information to queries employed to generate the stored results.

22. The system of claim 1, the stored results comprising at least one of raw data, transformed data, denormalized data, aggregated data, summary data, pivot table data, objects generated from the raw data, partial web responses, complete web responses, and queryable data.

23. An automatic memory invalidation system comprising:
a context that stores invalidation information for one or more components;
a query manager to submit database queries and invalidation information: and
one or more memories to store results generated from the database queries.

24. The system of claim 23, the one or more memories comprising local cache memory, ancillary cache memory, and remote high speed memory.

25. The system of claim 23, further comprising a security layer operative to the query engine and the dependency component to mitigate at least one of malicious queries with fictitious invalidation information and fictitious invalidation messages.

26. The system of claim 23, further comprising a mechanism to provide at least one of automatically invalidating saved results when the saved results become inconsistent and notifying components that saved results have become inconsistent.

27. The system of claim 23, further comprising a firewall as a security layer.

28. The system of claim 27, the one or more memories residing in the firewall.

29. The system of claim 27, the firewall facilitating at least one of result storage, result access and result invalidation in the one or more memories.

30. The system of claim 27, the one or more memories concurrently accessible to the one or more components.

31. A method to save results registered to automatically invalidate when the results become inconsistent, comprising:
storing invalidation information in a context;
sending the invalidation information with an associated query; and
saving the results generated from the query in memory.

32. The method of claim 31, further comprising checking the queried database for changes subsequent the query but prior to storing the result in order to ensure consistent results.

33. The method of claim 31, the invalidation information comprising at least one of an invalidation string, service information, and an expiration period.

34. The method of claim 33, the invalidation string comprising at least one of an identifier, a machine name, a port, an address, and a queue name.

35. The method of claim 34, the invalidation string further comprising at least one of authentication, encryption and protocol information.

36. The method of claim 31, the memory being cache memory.

37. A method to automatically invalidate saved results generated from a database query when the results become inconsistent, comprising:
receiving an invalidation message including at least a portion of invalidation information, and
utilizing the at least a portion of invalidation information to invalidate saved results.

38. The method of claim 37, further comprising automatically invalidating the results.

39. The method of claim 37, further comprising automatically re-querying to generate and save consistent results.

40. The method of claim 37, the invalidation message associated with at least one of a database change that would affect the stored results and an expiration period lapse.

41. A data packet transmitted between two or more computer components that facilitate storing results in memory and automatically invalidating the stored results when the stored results become inconsistent comprising:
invalidation information stored in a context that can be retrieved and sent with a query and utilized in an invalidation message to automatically invalidate saved results.

42. A computer readable medium storing computer executable components of a memory invalidation and registration system for saving results and invalidating the results when the results become inconsistent, comprising:
a context to store invalidation information associated with components;
a query manager to obtain invalidation information from the context and send the invalidation information with a requested query; and
a memory manager to facilitate saving results and invalidating inconsistent results.

43. A system for invaliding results saved in memory, comprising:
a means to obtain invalidation information of a component requesting to query a database;
a means to send the invalidation information with a query;
a means to receive an invalidation message; and
a means to invalidate inconsistent results stored in memory.

44. The system of 43, further comprising a means to automatically re-query the database for consistent results.

45. The system of 43, further comprising a means to verify invalidation information and invalidation messages are not fictitious.
